# EUROPEAN PATENT SPECIFICATION

(11) **EP 3 116 709 B1**
(45) Date of publication and mention of the grant of the patent: **07.12.2022**
(21) Application number: 15762209.3
(22) Date of filing: 13.03.2015
(51) Int. Cl.: B29C 70/44, B29C 70/54, B29C 70/36, B29C 33/34, B29D 99/00, B29C 33/30

(54) **VACUUM ASSISTED RESIN INFUSION MOULDING METHOD AND MOULD**
VAKUUMUNTERSTÜTZTES HARZINFUSIONSFORMUNGSVERFAHREN UND FORM
PROCÉDÉ DE MOULAGE PAR INFUSION DE RÉSINE ASSISTÉE PAR VIDE ET MOULE

(30) Priority: 14.03.2014 FI 20145237
(43) Date of publication of application: 18.01.2017
(73) Proprietor: Sironen, Antti, 33180 Tampere (FI)
(72) Inventor: Sironen, Antti, 33180 Tampere (FI)
(74) Representative: Berggren Oy
(86) International application number: PCT/FI2015/050165
(87) International publication number: WO 2015/136157

(56) References cited:
- WO-A2-2012/093136
- CA-A1- 2 487 738
- CN-A- 102 152 481
- CN-B- 102 152 481
- DE-A1-102009 030 860
- US-A1- 2002 020 934
- US-A1- 2002 149 134
- US-A1- 2008 083 493
- US-A1- 2013 099 429
- US-B1- 6 796 784

## Description

### Field of the Invention

The present invention relates to a vacuum assisted resin casting mould and to a method for vacuum assisted resin moulding. More particularly the present invention relates to a geometrically transformable vacuum assisted resin infusion casting mould for producing an infusion-moulded reinforced composite article, and to a method for using thereof.

### Background

Composite materials are materials made from two or more materials with significantly different physical or chemical properties, that when combined, produce a material with characteristics different from the individual components. The individual components remain separate and distinct within the finished structure. The new material may have advantageous properties: they are for example stronger, lighter or less expensive when compared to traditional materials.

One type of composite materials are reinforced plastics, such as fiber-reinforces polymers. They are generally used for example in high-performance products that need to be lightweight, yet strong enough to take harsh loading conditions such as aerospace components (tails, wings, fuselages, propellers), boat and scull hulls, bicycle frames, swimming pool panels and racing car bodies. Other applications include for example fishing rods, storage tanks, and baseball bats.

Composites are made up of individual constituent materials. Generally there are two main categories of constituent materials: matrix and reinforcement. The matrix material surrounds and supports the reinforcement materials by maintaining their relative positions. The reinforcements impart their special mechanical and physical properties to enhance the material properties. A synergism produces material properties unavailable from the individual constituent materials, while the wide variety of matrix and strengthening materials allows the designer of the product or structure to choose an optimum combination.

Composite fabrication usually involves wetting, mixing or saturating the reinforcement with the matrix, and then causing the matrix to bind together (with heat or a chemical reaction) into a rigid structure. The operation is usually done in an open or closed mould.

The fixed shape of a mould restricts the use thereof for moulding only a single type of article. Also the size of the article is usually restricted. For example it is difficult for mould articles with spherical shapes. There is a need for improved techniques for manufacturing moulded composite articles of desired shapes and sizes.

DE10 2009 030860 A1 discloses a device which has parts, which can be folded via elastic hinge means; these parts can be regulated in their positioning by means of positioning actuators, which gives the device a flexibility feature that enables the automation of the manufacturing process and moulding of aerodynamic components with complex geometry. The elastic hinge means are defined by an elastomeric material that gives this area adequate sealing conditions so that a vacuum can be drawn during the manufacturing process and the corresponding resin can be injected without leakage.

CA02487738 discloses a method of molding parts from a settable resin material comprising: providing a first mold part and a second mold part which are arranged when brought together to define a cavity therebetween within which the resin can be injected at molding pressures and caused to set for forming the part in a molding process; at least one of the mold parts comprising a pre-formed mold skin formed from a material which is flexible under the molding pressures; providing a liquid in a chamber arranged to provide thermal contact with the mold skin for changing the temperature thereof during the molding process; and providing a plurality of mechanical supporting elements for providing a supporting engagement with the mold skin at a plurality of spaced positions across the mold skin to prevent distortion of the mold skin during the molding, each mechanical supporting element including an engagement head portion and an adjustable portion such that actuation of the adjustment portions causes movement of the head portion relative to the mold skin to accommodate different mold skins.

### Summary

The present disclosure provides a geometrically transformable vacuum assisted infusion casting mould for producing an infusion-moulded reinforced composite article, the mould comprising
- at least two movable mould walls defining a mould space, a mould surface and an opening to the mould space, the mould walls being positionable to provide a desired shape for the object to be moulded, wherein the contour formed by the mould walls define at least a partial outer surface or inner surface of the composite structure to be moulded, two mould walls being connected to each other by a junction,
- a vacuum bag sealable to the mould and forming a vacuum space with the mould when sealed,
- means for introducing vacuum into the vacuum space, and
- sealing means located at each junction of the two mould walls on the other side of the mould than the vacuum space, the sealing means being arranged to seal the junction when vacuum is applied into the vacuum space, wherein the sealing means are elongated substantially flat pieces comprising elastic material, such as elastomeric or plastomeric material, and wherein the flexible material of the sealing means is arranged to be pressed by the suction of the inside vacuum to the junction of the two mould walls to air-tightly seal the junction.

One embodiment provides the geometrically transformable vacuum assisted infusion casting mould for producing an infusion-moulded reinforced composite article, the mould comprising
- at least two movable mould walls defining a mould space, a mould surface and an opening to the mould space,
- a vacuum bag sealable to the mould and forming a vacuum space inside the mould when sealed,
- means for introducing vacuum into the vacuum space, and
- sealing means located at each junction of two mould walls outside the mould, the sealing means being arranged to seal the junction when vacuum is applied into the vacuum space.

One embodiment provides the geometrically transformable vacuum assisted infusion casting mould for producing an infusion-moulded reinforced composite article, the mould comprising
- at least two movable mould walls defining a mould space, a mould surface and an opening to the mould space,
- a vacuum bag sealable to the mould and forming a vacuum space outside the mould when sealed,
- means for introducing vacuum into the vacuum space, and
- sealing means located at each junction of two mould walls inside the mould, the sealing means being arranged to seal the junction when vacuum is applied into the vacuum space.

In on embodiment said moulds further comprise means for introducing liquid matrix material into the vacuum space.

The present disclosure provides a method for vacuum assisted infusion moulding of a reinforced composite article, the method comprising
- providing the geometrically transformable vacuum assisted resin infusion casting mould of any of claims 1 to 10; and
- positioning the movable mould walls to provide a desired shape for the article to be moulded,
- introducing reinforcement material onto the mould surface, generally into the location of the vacuum space,
- sealing the mould with said vacuum bag to form a vacuum space,
- introducing vacuum into the vacuum space, and
- introducing matrix material into the vacuum space to mould the reinforced composite article.

The aspects of the invention are characterized in the independent claims.

Various embodiments are disclosed in the dependent claims.

The mould of the invention may be modified to define variety of different moulding shapes for different mouldable articles. The inventive concept may be used to produce objects of elongated shapes but also objects with spherical or roundish shapes, which are suitable for example as tanks or containers.

With the mould and the method of the invention it is possible to produce articles which have large dimensions, for example very long articles. It is also possible to change the dimensions throughout the length of the article. In principal a strength calculation may be carried out for an article of infinite length. The equipment needed are compact and easily transferable and the costs for moulding articles are low.

The sealing means used herein are reusable thus saving time and money. Also the materials used in the sealing means provide tight-proof seals thus improving the efficiency of the moulding process.

### Description of the drawings

- Figure 1: shows a cross-sectional view of an example of a casting mould
- Figure 2: shows a detailed view of an example of the junction of two mould walls
- Figure 3: shows a perspective view of a mould of an elongated article carried out in steps
- Figure 4: shows a mould for moulding a body of revolution type of article
- Figure 5: shows a mould for moulding a spherical article

### Detailed description of the embodiments

The present invention utilizes a vacuum assisted casting process, for example a resin casting process, wherein a casting mould is used. The process may use for example a vacuum assisted resin infusion method. Resin infusion is a process by which vacuum draws resin into a dry fibre laminate. Generally a vacuum bag is used. Vacuum bag moulding uses a flexible film to enclose the part and seal it from outside air. In one example the vacuum bag is sealed to the mould with vacuum bagging tape, which may be made of similar or the same material as the sealing means. A vacuum or underpressure is then drawn on the vacuum bag and for example ambient or atmospheric pressure compresses the part during the cure. Also positive pressure may be used, generally in the range of 1-8 bar, for example in an autoclave.

One embodiment provides a geometrically transformable vacuum assisted infusion casting mould for producing an infusion-moulded reinforced composite article, according to claim 1, the mould comprising
- at least two movable mould walls defining a mould space and an opening to the mould space,
- a vacuum bag sealable to at least two movable mould walls of the mould, for example at said opening, and forming a vacuum space with the mould when sealed,
- means for introducing vacuum into the vacuum space, and
- sealing means located at each junction of two mould walls on the other side of the mould than the vacuum space, the sealing means being arranged to seal the junction when vacuum is applied into the vacuum space. More particularly the mould may be a resin infusion casting mould

The movable mould walls may be positioned to provide a desired shape for the object to be moulded i.e. the contour formed by the mould walls define at least a partial outer surface or inner surface of the composite structure, or a partial mould which is then finalized and sealed with the vacuum bag to define a casting space. The movable mould walls may be elongated in shape and they may contain different shapes of surfaces, such as planar or arched surface, for providing a desired shape for the object to be moulded. The mould walls may also be tilted to enable different dimensions at different ends of the object.

The concept of the invention may be applied to two main embodiments. In the first embodiment a vacuum space is formed inside the mould, so the article will be moulded inside the mould. In the second embodiment a vacuum space is formed outside the mould, so the article will be moulded outside the mould. In general the mould surface, or the surfaces of the mould walls, and the vacuum bag form the casting space when sealed. The casting space refers to the space wherein the matrix material and the reinforcement material are applied and wherein the composite article is to be moulded. The surfaces of the at least two mould walls, and the vacuum bag form a casting space, which is sealed. A sealed casting space may also be called a vacuum space. All the parts of the vacuum bag, mould walls and the sealings should be non-gas-permeable, or at least low-gas permeable in cases where the matrix material is not in fully liquid form.

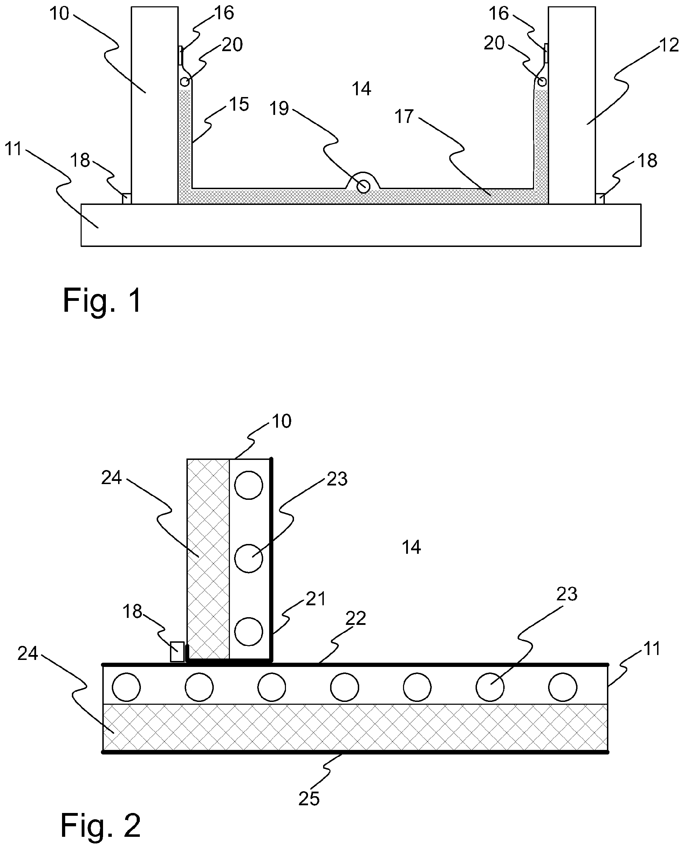

One embodiment provides a geometrically transformable vacuum assisted infusion casting mould for producing an infusion-moulded reinforced composite article, according to claim 1, wherein the mould comprises at least two movable mould walls defining a mould space and an opening to the mould space, a vacuum bag sealable to the mould, for example at said opening, and forming a vacuum space inside the mould when sealed, means for introducing vacuum into the vacuum space, and sealing means located at each junction of two mould walls outside the mould, the sealing means being arranged to seal the junction when vacuum is applied into the vacuum space. The mould space is open and therefore not airtight until the vacuum bag is sealed to the opening. When the vacuum bag 15 is sealed to at least two mould walls 10, 11, 12, a vacuum space 17, or a casting space, is formed, as seen for example in Figure 1.

There may be a plurality of the movable mould walls, for example two, three, four, five, six, seven, eight, nine, ten or more. The at least two mould walls define the mould space. In one embodiment wherein the article is moulded inside the mould, the mould space is used as a part of the casting space for the object to be moulded.

The desired shape may be for example an elongated shape, such as a rod or bar-like shape. General examples of articles which can be moulded into desired shape include aerospace components such as tails, wings, fuselages, propellers and the like, boat masts and other boat parts, building parts, such as bridge, house or fence elements, fishing rods, storage tanks, baseball bats or the like.

In one embodiment the mould space defines an elongated casting space having a length at least two times of the width of said space, or at least three, four, five or more times, such as ten or more times. In practice for example when moulding long objects the diameter of the casting space may be for example in the range of 5-200 centimetres and the length of the mould respectively in the range of 10-300 centimetres or several meters, such as up to 5 meters.

In one embodiment the mould surface defines a substantially spherical casting space, for example for moulding a body of revolution type of article or a partial body of revolution type of article. In such case the mould walls may define a part of the spherical shape and the mould walls are anchored to a center or the pivot of the final shape, or to another point inside the final shape, with anchoring means, for example with metal rods. In this embodiment the sealing means are preferably on the same side as the anchoring means and the article is moulded to the outer side of the mould. When a part of the article has been moulded, the mould walls may be moved to a next position while maintaining the anchoring to the center, and sealing the mould as an extension to the already moulded article. Next the method comprises introducing reinforcement material onto the mould surface, sealing the mould with the vacuum bag, introducing vacuum into the vacuum space, and introducing resin into the vacuum space to mould an extension to the previously moulded composite article. By moving the mould and moulding a next part the body of revolution type of article is finally obtained. Examples of such articles include for example pipes and cylinders, for example a chimney.

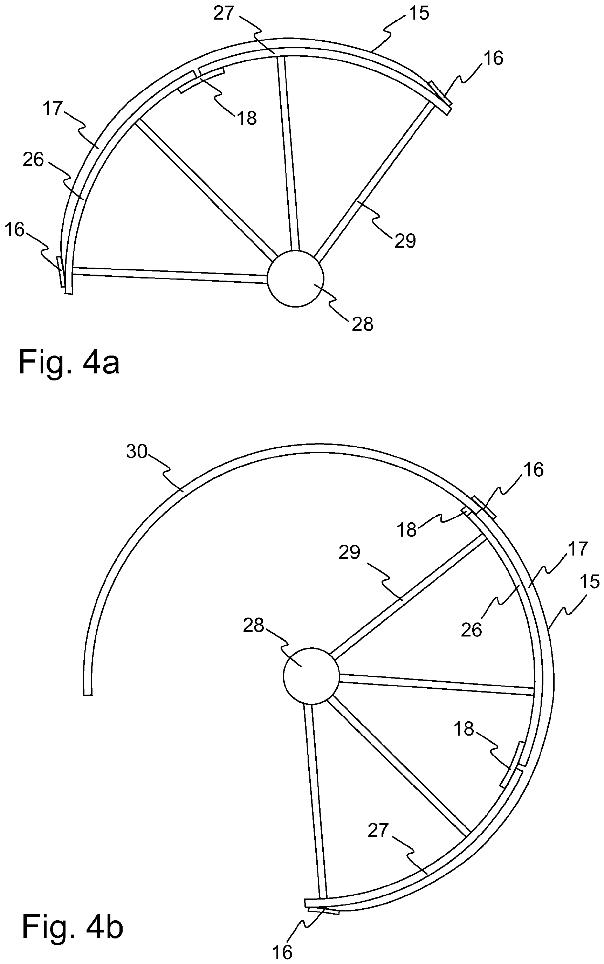

In one specific example for moulding such a body of revolution type of article the already moulded part of the article acts as a mould wall, for example as shown in Figure 4b. There needs to be only one movable mould wall 26, which is sealed to the already moulded part 30. The sealing means 18 is used to seal the junction between the moulded part 30 and the mould wall 26.

In one embodiment the moulding is carried out outside the mould, for example for moulding substantially spherical article, such as a container or the like. Also other forms are possible, such as ellipsoid-like articles or the like. The article may also be asymmetric article. In such case the mould comprises at least two movable mould walls defining a mould, a mould space and an opening to the mould space. The mould or the mould space may be substantially spherical or having other roundish shape. The at least two movable mould walls may be anchored to a support inside the mould with anchoring means, for example with rods, such as metal rods, composite rods or the like. The support itself may be anchored through the opening to floor, ground or the like.

In this embodiment a vacuum bag sealable to the mould is placed outside said mould to form a vacuum space outside the mould when sealed. Especially if the mould is substantially spherical the vacuum bag may be cut with templates into parts which are then combined and adhered together on the mould, for example by using a self-adhesive tape or a vacuum bagging tape. The vacuum bag may also be unwound from a roll and wrapped around the mould. The folds are sealed to be airtight.

The system has means for introducing vacuum into the vacuum space, means for introducing matrix material into the vacuum space, and sealing means located at each junction of two mould walls inside the mould, the sealing means being arranged to seal the junction when vacuum is applied into the vacuum space. In one example the sealing means are already attached to the mould walls when setting up the mould structure, for example sealing means are attached with an adhesive to a first mould wall for sealing the junction of said first mould wall and another second mould wall. This will help sealing the junctions inside the mould. After moulding the mould walls may be moved to dismantle the mould so that the mould walls may be taken out from the moulded object through the opening. This system enables moulding of very thick objects, the thickness being easily in the range of 10-50 cm, or even 1 meter.

The mould defined by the separate mould walls may be made of rigid material, such as plastics, metals or composite materials. In one embodiment the mould is heatable i.e. the mould contains heating means to heat the resin during the moulding. The heating means may comprise for example resistance thermal elements or tubes or channels for heated liquid medium.

In addition to the mould space in one embodiment the mould walls define an opening to the mould space. In one embodiment this opening will be used to seal the vacuum bag to the mould at said opening for defining a pressure-tight vacuum space or vacuum chamber together with the mould walls inside the mould space when sealed. The opening may be used for introducing reinforcement material, such as fibers, into the mould space. After this the opening may be closed with the vacuum bag. In another embodiment the opening will be used to seal the vacuum bag to the mould at said opening for defining a pressure-tight vacuum space or vacuum chamber together with the mould walls outside the mould when sealed.

The vacuum bag generally comprises a flexible material, for example a tear resistant film. In one embodiment the vacuum bag comprises medium hard material, such as medium hard silicone or plastic sheet. The flexible material allows the vacuum bag to compress during the application of vacuum. The vacuum bag may be for example a tube shaped or a sheet shaped. The edges of the vacuum bag are sealed against the edges of the mould surface to enclose the part against an air-tight mould. The sealing may be carried out using sealing means or sealing tape, for example by using a vacuum bagging tape, such as a sticky gum tape or the like, to provide an air-tight seal. Also a compressing means may be used to press edges of the vacuum bag tightly to the mould. In one embodiment the vacuum bag is sealed using the same type of sealing means as used for sealing the junction between the mould walls as described herein, which may also be called vacuum bagging tape. One example of such vacuum bagging tape is butyl tape, which preferably does not contain any adhesive. If said same type of sealing means are used, they are usually placed between the vacuum bag and the mould surface. An adhesive tape or compressing means may be placed outside the vacuum bag.

In one embodiment the vacuum bag comprises elastomeric or plastomeric material. In one embodiment the vacuum bag comprises flexible plastic. In one embodiment the vacuum bag comprises silicone material. In one embodiment the vacuum bag comprises a fabric coated with elastomeric, plastomeric, flexible plastic or silicone material. When applying the vacuum bag it should be ensured that there is enough bagging film to reach all the shapes and contours of the mould to avoid bridging, which may result in resin only rich areas in the final product.

In one example the system includes two overlapping vacuum bags. This double-bag infusion concept provides two vacuum spaces, which may facilitate the moulding process. The actual infusion takes place in the first bag, where gasifying or volatile compounds, such as air, moisture and solvent are extracted. Sealed to the mould and enveloping the first bag, the second bag provides extra pressure on the infused part. The vacuum pressure in the first bag is reduced as the resin fills the part, so it no longer exerts full pressure on the laminate. Without binding to any theory it is believed that the second bag compensates for this, applying continued full vacuum pressure to the part, hence allowing for further resin removal, increased fiber content and an improved thickness consistency together with a lower void content. The second bag creates full vacuum pressure between the two bags, not on the first bag. A sheet of porous material (a breather) may be used between the two bags to allow for adequate vacuum flow.

The system has means for introducing matrix material into the vacuum space, generally means arranged to guide a liquid matrix material into the vacuum space. Generally a liquid matrix material, such as resin, is prepared prior to use in a container and led through a tube or hose into the mould. Vacuum may be used to transfer the matrix material into the vacuum space (infusion moulding). Also pressure may be used to introduce the matrix material into the vacuum space, i.e. the resin may be injected into the vacuum space (injection moulding).

In one embodiment the mould further comprises means for introducing matrix material into the vacuum space. In such case the matrix material is generally provided as liquid or fluid, such as liquid resin.

In one embodiment the means for introducing matrix material into the vacuum space comprise one or more channels or ducts arranged inside the vacuum space, i.e. the channels or ducts pass through the vacuum bag. The channels of ducts may branch inside the vacuum bag and form for example ladder-like or other branched structures.

In one embodiment the means for introducing matrix material into the vacuum space comprise one or more channels or ducts integrated with the vacuum bag, for example with elastomeric or plastomeric vacuum bag. Also these channels or ducts may form branched structures. The means for introducing matrix material into the vacuum space may be connected to a reservoir or container of matrix material by using a tube or hose.

The flow of the matrix material, such as resin, into the mould may be assisted by using an infusion mesh or flow media (also called a bleeder) to ensure that the matrix material can flow from the matrix material feed line through the laminate. In the mesh there are gaps through which the matrix material can flow even under high vacuum. The vacuum connectors may be positioned directly onto the infusion mesh to ensure the flow of air and matrix material. An alternative to positioning the vacuum line connector directly above the infusion mesh is to end the infusion mesh short of where the vacuum connector will be positioned. A piece of breather material, such as a folded fabric, is then used to create a pad that can absorb excess matrix material from the infusion, preventing it from being drawn into the vacuum line. In one example a resin trap is used. Resin trap is a vacuum sealed container which is installed between the mould and the vacuum pump to capture excess resin that enters the vacuum line before it can damage the pump. The collected resin may be recycled.

In one embodiment the matrix material is introduced onto the mould surface, at the location wherein the vacuum space is to be formed, in solid form, such as in the form of sheets or films, which is then gelled using external energy, for example by applying heat. This kind of method may be called resin film infusion. The matrix material is not in fully liquid form during the heating, but for example as a gelled form. The matrix material sheets or films are generally applied on a layer of reinforcing material, which may be also in a form of a sheet. Another layer of reinforcing material may be further applied onto the layer of matrix material, and so on, to form a sandwich structure

In one example the matrix material is introduced into the vacuum space as preimpregnated with the reinforcement material with liquid matrix material. This method is called a prepreg (pre-impregnated) method. In one example the matrix material is only partially cured to allow easy handling; this material may require cold storage to prevent complete curing. Pre-preg allows impregnating the fibers on a flat workable surface, or rather in an industrial process, and then later to form the impregnated fibers to a shape which could prove to be problematic for a hot injection process. Prepreg also allows impregnating a bulk amount of fiber and then store it in a cooled area for an extended period of time to cure later. The reinforcement material may be impregnated before introducing them onto the mould surface, or the reinforcement material may be impregnated after being applied onto the mould surface.

A release film may be placed in direct contact with the composite material. It may be perforated and it does not stick to the cured matrix material but allows the matrix material to penetrate it from the mesh to the laminate reinforcements. The release film may be comprise for example polyethylene.

The system has means for introducing vacuum into the vacuum space. These means may comprise a valve for drawing out the air from the sealed system. A vacuum device, such as a vacuum pump or vacuum reservoir may be connected to the valve to introduce a vacuum inside the sealed system. The vacuum as used herein may refer to vacuum or at least partial vacuum or underpressure, for compressing the vacuum bag and/or for drawing liquid matrix material into the vacuum space. Generally the vacuum may be at least -0.9 bar (NTP), more preferably -0.98 bar, but generally even higher vacuums may be used, such as close to -1 bar. As a result, uniform pressure, for example approaching one atmosphere, will be applied to the surfaces of the objects inside the bag. The means for introducing vacuum into the vacuum space may also include means for closing the vacuum inlet, for example a valve, for maintaining the vacuum, and for opening the vacuum inlet to let air flow into the system to terminate the vacuum.

In one example the vacuum inlet is substantially at one end of the mould and the matrix material inlet is substantially at the other end of the mould. This example applies especially for relatively small mouldings wherein there are one vacuum inlet and one matrix material inlet. In larger moulds there may be a plurality of such inlets suitably distributed, for example to each loading point of each specific mould. When a vacuum is applied, the suction transfers the matrix material from the matrix material inlet through the mould and the material inside it so that the matrix material is distributed into the vacuum space. The vacuum should be maintained until the part is fully cured, or at least substantially cured, or gelled.

The sealing means are placed at each junction of two mould walls outside or inside the walls or the mould. The sealing means are arranged to seal the junction when vacuum is applied into the vacuum space, i.e. the flexible material of the sealing means is pressed by the suction of the inside vacuum to the junction of two mould walls to air-tightly seal the junction. Two mould walls connect to each other by a butt junction, and the sealing means is placed on top of the junction to cover the junction. The sealing means may be for example elongated substantially flat pieces that are positioned above the junction lines, for example strips or tabs. The thickness of the sealing means may be in the range of 1-10 mm, or 1-5 mm, for example 1-4 mm. The width of a sealing means may be in the range of 1-10 cm, for example 1-5 cm, or 1-3 cm, and the length is determined by the length of the junction line so that the sealing means cover at least the whole junction line and is preferably longer, such as few centimetres longer, for example 1-5 centimetres longer than the junction line. In one example the width of the sealing means is in the range of 5-15 mm and the thickness in the range of 3-8 mm, the width:thickness ratio being in the range of 1:1 to 3:1, for example about 1:2. In one example of a tape-like sealing means the width of the sealing means is in the range of 5-50 mm, for example 10-30 mm, and the thickness in the range of 1-4 mm, the width:thickness ratio being about 10:1, for example in the range of 3:1 to 15:1.

Such flexible sealing means strips or sheets can be used with wide variety of mould walls, such as rigid mould walls made of metal or composite material, or with softer mould walls, which can be made of softer or more flexible materials, such as cardboard, plastics or even paper. The sealing means may be reused several times, even up to 1000 times, and because of the strip-like shape they are easy to handle. When the vacuum has been removed, the sealing means may be easily removed. The strip-like sealing means may be removed even during the curing of the article, i.e. the article may be not fully cured and therefore it has not obtained the final strength. The removal of the sealing means does not damage the curing article and the sealing means may be reused, which saves time and costs.

According to the invention the sealing means comprise elastic material. The material should ensure an airtight seal between two mould walls when vacuum is applied. However, the sealing means should not be sucked too deep into the junction, which may have a gap of about even 1 mm, so certain stiffness and/or thickness of the material is required. A general self-adhesive tape is not suitable for this purpose as it does not form tight enough seal and it may be sucked by the vacuum into the junction gap. Generally the material of the sealing means is such elastic material, which makes the seal tighter as the vacuum increases. The same material may also be used for sealing the vacuum bag to the mould and/or to a cured article. For applications where the matrix material is heated, for example to 150ºC, or to 200ºC or even to 400ºC, the material of the sealing means should be heat-tolerant. Examples of such heat-tolerant materials include heat-tolerant or heat-resistant elastomers, such as silicone, heat-tolerant butyl, ethylene acrylic elastomers, fluoroelastomers and perfluoroelastomers.

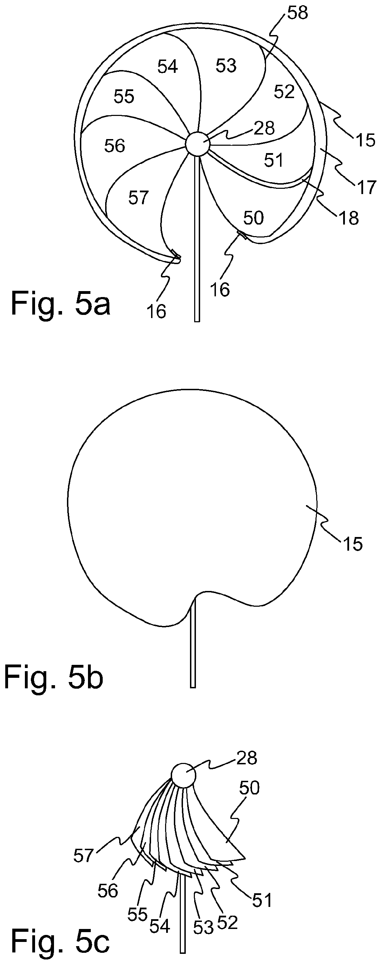

Preferably there is no adhesive in the sealing means for sealing the junction, i.e. there is no adhesive in the junction area. In one example there may be a partial adhesive in the sealing means for attaching it to a mould wall to easy the application of the sealing means, for example if they are to be applied inside a mould. However, in such case the adhesive is not in the junction area and does not affect to the air-tightness of the junction, but the adhesive may be on one edge of the sealing means strip, for example as a narrow sticking strip of about 0.2-10 mm, or less than one third of the width of the sealing means strip. This way the mould wall may contain a sealing means positioned and ready to be applied to the junction. One example of such arrangement is the mould arrangement shown in Figure 5. The sealing means may be pre-attached to the mould walls 50-57 from the other side so when setting up the mould the sealing means are already in the right positions and require only pressure, for example by hand, to be sealed to the junctions. This helps the procedure as it may be difficult to see inside the mould. When removing the mould setup from the moulded article As shown in Figure 5c the sealing means stay attached to the mould walls.

According to the invention the sealing means comprise elastomeric or plastomeric material. Elastomer is a polymer with viscoelasticity (or "elasticity"), generally having low Young's modulus and high failure strain compared with other materials. Elastomers are often called as rubbers. Elastomers are usually thermosets (requiring vulcanization) but may also be thermoplastic. The long polymer chains cross-link during curing, i.e., vulcanizing. Examples of elastomers include unsaturated rubbers, such as natural polyisoprene, synthetic polyisoprene, polybutadiene, chlorophene rubber, butyl rubber, styrene-butadiene, or nitrile rubber. Other examples of elastomers include saturated rubbers, such as ethylene propylene rubber, epichlorohydrin rubber, polyacrylic rubber, silicone rubber, fluorosilicone, fluoroelastomers, polyethylene block amides, chlorosulfonated polyethylene or ethylene vinyl acetate. Other types of elastomers include thermoplastic elastomers, proteins such as resilin and elastin, polysulfide rubber and elastolefin. One example of an elastomeric sealing means is a butyl tape. Such butyl rubber tape is tacky but does not contain an adhesive, and it is stiff enough. Therefore it is suitable for sealing the air-tight junctions. Other elastomers have similar properties.

A plastomer is a polymer material which combines qualities of elastomers and plastics, such as rubber-like properties with the processing ability of plastic. Examples of plastomers include ethylene-alpha olefin copolymers.

In one embodiment the sealing means comprise flexible plastic.

In one embodiment the sealing means comprise silicone. Silicones are polymers that include silicon together with carbon, hydrogen, oxygen, and sometimes other elements. More precisely called polymerized siloxanes or polysiloxanes, silicones are mixed inorganic-organic polymers with the chemical formula [R₂SiO]ₙ, where R is an organic group such as methyl, ethyl, or phenyl. These materials consist of an inorganic silicon-oxygen backbone (···-Si-O-Si-O-Si-O-···) with organic side groups attached to the silicon atoms, which are four-coordinate.

In one embodiment the sealing means comprise silicone rubber, which is an elastomer (rubber-like material) composed of silicone, which is itself a polymer, containing silicon together with carbon, hydrogen, and oxygen.

The present invention also provides a method for vacuum assisted resin infusion moulding of a reinforced composite article, the method comprising -providing the geometrically transformable vacuum assisted resin infusion casting mould as described herein; and
- positioning the movable mould walls to provide a desired shape for the article to be infusion moulded,
- introducing reinforcement material onto the mould surface, generally into location of the vacuum space,
- sealing the mould with said vacuum bag to form a vacuum space,
- introducing vacuum into the vacuum space,
- introducing matrix material into the vacuum space to mould the reinforced composite article. Generally the reinforcement material is introduced onto the surface of the mould. The matrix material may be introduced into the vacuum space after the vacuum space has been sealed, or the matrix material may be introduced into the vacuum space, or onto the surface of the mould, before the vacuum space has been sealed, for example as solid sheets or as impregnated in the reinforcement material.

In general the reinforcing and matrix materials are combined, compacted, and cured (processed) to obtain the composite article. After this the article is essentially set, but it can further deform under certain conditions.

Curing refers to a chemical reaction or setting wherein the polymer changes from a liquid into a solid state. Cure time refers to the time required for the liquid polymer to set into a solid matrix, which generally includes precure and postcure times. Open time refers to a time period wherein the polymer is still in liquid form and is workable (for example resin flow time). Gel phase is an initial curing phase Gel time refers to an amount of time it takes for the composite material to solidify into a gel. The gel point is reached when crosslinking begins to dominate the nature of the resin. After this point the matrix material does not reach any new reinforcing material fibers any more. A curing system may be used including one or more additive causing the polymer to cure. Such additives include promoters, accelerators, catalysts and peroxides. One example of such additive is a hardener.

The open time may vary ranging for example from about 15 minutes to several hours.. Generally the open time time is in the range of 15-60 minutes or several hours for most polyester or vinyl ester resins, or even up to 14 hours with certain epoxy resins. The precure time may be about 24 hours for polyester, vinyl ester and epoxy resins at 18-23ºC from gel phase to procured form. The postcuring may take for example 5-24 hours at 50-80ºC.

In general, most of the polymer-based composite materials contains at least two parts, a substrate and a resin. Examples of such composite materials include fiberglass, carbon fiber, and Kevlar.

In one embodiment the matrix material comprises resin. In one embodiment the matrix material is resin. "Resin" as used in the examples herein may be generalized to any suitable matrix material. The resin matrix material may be a polymer. In one embodiment the resin comprises polyester resin. Polyester resins are unsaturated resins formed by the reaction of dibasic organic acids and polyhydric alcohols. Polyester resins are thermosetting and, as with other resins, cure exothermically.

In one embodiment the resin comprises vinyl ester resin. Vinyl ester is a resin produced by the esterification of an epoxy resin with an unsaturated monocarboxylic acid. The reaction product is then dissolved in a reactive solvent, such as styrene, to a 35-45 per cent content by weight. It can be used as an alternative to polyester and epoxy materials in matrix or composite materials, where its characteristics, strengths, and bulk cost intermediate between polyester and epoxy.

In one embodiment the resin comprises epoxy resin. Usually the epoxy resin is mixed with a hardener and then introduced immediately into the mould before the resin begins to harden. Epoxy resins, also known as polyepoxides are a class of reactive prepolymers and polymers which contain epoxide groups. Epoxy resins may be reacted (cross-linked) either with themselves through catalytic homopolymerisation, or with a wide range of co-reactants including polyfunctional amines, acids (and acid anhydrides), phenols, alcohols, and thiols. These co-reactants are often referred to as hardeners or curatives, and the cross-linking reaction is commonly referred to as curing. Reaction of polyepoxides with themselves or with polyfunctional hardeners forms a thermosetting polymer, often with strong mechanical properties as well as high temperature and chemical resistance. Examples of epoxy resins include Bisphenol A epoxy resin, Bisphenol F epoxy resin, aliphatic epoxy resin and glycidylamine epoxy resin.

Whilst some epoxy resin/hardener combinations will cure at ambient temperature, many require heat, with temperatures generally in the range of 50-80°C, even up to 150°C, and up to 200°C or even 400°C in some special systems. Insufficient heat during cure will result in a crosslinked network with incomplete polymerisation, and thus reduced mechanical, chemical and heat resistance. Cure temperature should typically attain the glass transition temperature (Tg) of the fully cured network in order to achieve maximum properties. Temperature may be increased in a step-wise fashion to control the rate of curing and to prevent excessive heat build-up from the exothermic reaction.

In one embodiment the resin comprises shape memory polymer (SMP) resin.

The substrate or the reinforcement material adds rigidity to the composite material. The reinforcement material may comprise fibers, which may be divided into two categories: short fiber reinforced materials and continuous fiber reinforced materials. The reinforcement material may be in a form of a sheet, which is sometimes called a laminate, for example as a glassfiber sheet.

The reinforcement material may be selected from glass fibers, carbon fibers, natural fibers such as cellulose (for example wood from softwood trees such as spruce, pine, fir, larch, douglas fir or hemlock, or from hardwood trees such as birch, aspen, poplar, alder, eucalyptus or acasia, or from a mixture of softwood and hardwood; or paper fiber, such as recycled paper fiber; or from nonwood material such as agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo or reed), plastic fibers such as high strength polymers, or polyethylene or aramide fibers or other thermoplastic or thermosetting fibers, metal fibers, ceramic fibers, textile fibers and the like.

In one embodiment the reinforcement material is introduced onto the mould surface, or into the mould space or vacuum space through the opening to the mould space. The reinforcement material may be added into the mould or on the mould manually through the opening and positioned to be distributed on the mould walls in the mould space or onto the mould surface outside the mould. Generally this is carried out before sealing the mould with said vacuum bag to form a vacuum space inside or outside the mould space.

In one embodiment the reinforcement material is introduced into the mould space or vacuum space in admixture with the liquid matrix material, such as resin. This is carried out after the vacuum space has been sealed. In this case the reinforced material generally comprises fibrous material which can be mixed with the matrix material, such as any fibers described above.

Also a separate core material may be used. Generally this is a material of higher thickness and lower density located between two composite skins to increase the bending strength with only a little increase in weight. Examples of core material include foams, such as PVC, PET or PUR foams, honeycombs and void cores. The foams are generally provided as ready sheets, but is may be possible to inject foam material which will be cured afterwards.

The mould surfaces may be coated with a coating material. Coating material may be used for example to facilitate abrading or polishing the mould surface. The coating material may be for example a gel coat, such as a polyester, epoxy or vinyl ester gel coat. The mould surface may also be coated with release agent to prevent the resin from sticking to the mould and assisting the release of the cured article from the mould. One example of release agent is release wax. The coating, for example with a gel coat, in advantageous also when preparing a long article, wherein gel coat remaining in the article will mask the discontinuity of the parts of the article moulded at different time.

In one example a sandwich structure is formed inside the mould. The sandwich structure may contain at least a fiber layer and a foam layer. In one example the sandwich structure contains a first fibre layer, a foam layer and a second fibre layer. In one example the sandwich structure contains a gel coat layer on the mould walls, a fiber layer, a foam layer, optionally a second fiber layer, a fabric layer (such as a release layer) and an infusion mesh.

In one embodiment the method comprises, after the moulded article has been cured, moving the casting mould to the other position of the moulded article, for example to the other end, and positioning and sealing the mould as an extension to the moulded article, generally by using any suitable sealing means described herein,
- introducing reinforcement material onto the mould surface,
- sealing the mould space with said vacuum bag,
- introducing vacuum into the vacuum space, and
- introducing resin into the vacuum space to mould an extension to the previously moulded composite article. This embodiment is suitable for moulding an elongated article, generally longer than the length of the mould. By repeating the above step a very long article may be manufactured using the same casting mould. In this embodiment the article is generally moulded inside the mould.

In another example however more than one mould are used. For example a first mould is used for curing a first part of the article and a second mould is used for moulding an extension (as a second part) to the first part. Preferably the first part is cured as non-gas-permeable to enable gas-tight sealing of the vacuum bag. This is especially important when the matrix material is in liquid form. The second mould is sealed to the first part of the article, reinforcement material is introduced into the mould space of the second mould, the mould space of the second mould is sealed with the vacuum bag, and resin is introduced into the vacuum space to mould an extension to the previously moulded composite article (the first part). The reinforcement material is generally arranged to overlap between the two parts to enhance the rigidity of the final article. According to the strength theory if the reinforcement material overlap for certain length the object may be considered uniform in respect the strength of the composite material.

In another example when the first part of the article is already cured inside the first mould, the second part is still curing i.e. it is partially cured inside a second mould. A third mould is placed as an extension to the second part for moulding an extension as a third part, and the moulding steps are carried out again. When the first and the second parts have been cured, the first mould may be removed from the first part and moved next to the third mould as an extension for moulding another part. This way the cycle starts over and new starting materials may be applied to the latest mould which has been sealed to the previous part (which may not be fully cured in that phase yet).

In theory an article with infinite length may be moulded by repeating the steps by using one, two, three or even more moulds.

The mould or moulds may be anchored with anchoring or connecting means, such as rods or poles, to keep them still during the moulding. In one embodiment the anchoring means include at least one rod attached to each mould wall from the other end and to a anchoring body from the other end. The rods may be for example metal rods. In one embodiment the anchoring means include rails wherein the mould or moulds is/are positioned. During the moulding steps the mould(s) may be moved forward on the rails. The rails may comprise rods attached to a frame, such as metal rods welded to a metal frame.

The positioning of the mould walls may be carried out using for example a laser device or an alignment wire.

With the method described herein an infusion-moulded reinforced composite article is obtained. The use of the at least two movable mould walls enable the moulding of articles with distinguishable forms, which may be detected by investigating the moulded object.

Next the invention is described with non-limiting examples with references to the figures.

### Examples

Figure 1 shows an example of a mould comprising three movable mould walls 10, 11, 12 defining mould space 14. A vacuum bag 15 is attached to the first mould wall 10, the second mould wall 11 and to the third mould wall 12 and sealed with vacuum bag sealing means 16 air-tightly. In this example the sealing means 16 are placed between the mould walls 10, 11, 12 and the vacuum bag 15. The mould walls 10, 11, 12 and the vacuum bag 15 define a vacuum space 17 which also corresponds to casting space. The junctions between the mould walls 10, 11, 12 are air-tightly sealed with the sealing means 18 from outside the mould. A feed line for the matrix material 19 and two vacuum lines 20 are arranged into the vacuum space 17. Reinforcing material (shown as a pattern) has been introduced into the vacuum space 17 before sealing.
Figure 2 shows a more detailed view of the junction of two mould walls 10, 11. At least the surfaces 21, 22 inside and between the mould walls 10, 11 and extending to the sealing means are non-permeable to gases to enable a gas-tight mould when sealed with the sealing means 18. The surface layer may be for example AlO₂/Fe-granule-filled epoxy, or it may be a layer of stainless steel. The material inside the mould wall may be other material and does not have to be non-gas permeable, for example it may be polyurethane, polystyrene or composite material.
   In this example there are ducts 23 for liquid circulation warming inside the mould walls 10, 11 in a heating layer, as well as a layer of insulating material 24, which may be for example PUR or polystyrene. If the rigidity of the mould is important, there may also be an optional support layer 25 on the other side of the mould to give rigidity to the mould. Another option is to make the other layers, such as the heating layer, rigid enough to provide the support.

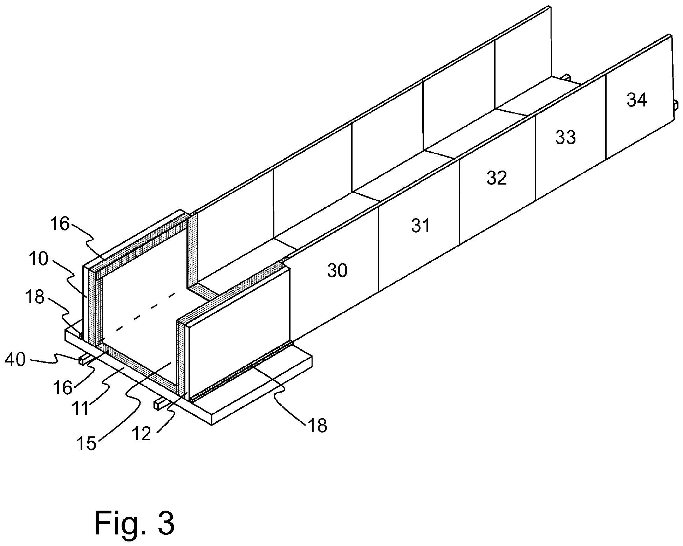

Figure 3 shows a perspective picture of an example wherein multiple parts 30, 31, 32, 33, 34 have been moulded by using the same mould. After the previous part of the article has been cured, the mould is moved to a new location, reinforcement material is added and the mould and the vacuum bag is sealed in this example with adhesive sealing tape 16 to the previous part 30 for moulding an extension to the cured part. The junctions between the mould walls 10, 11, 12 have been sealed with the sealing means 18. In this example a U-shaped elongated body has been moulded. The means for introducing vacuum, means for introducing matrix material and certain other required components are not shown in Figure 3. The whole arrangement is placed on trails 40 for moving and positioning the mould accurately.

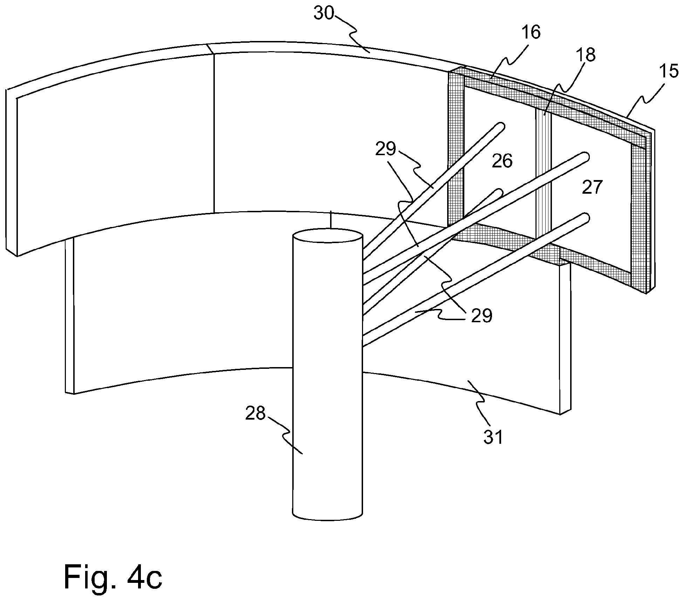

Figure 4a shows an example of a mould for moulding a body of revolution type of article. Herein the mould walls 26, 27 define a part of the spherical shape and they are anchored to a center 28 with anchoring means 29, which are poles or rods in this example. The sealing means 18 between the two mould walls is placed inside the mould and the vacuum bag is placed outside the mould and in this example sealed with adhesive sealing tapes 16 to the mould walls 26, 27, wherein the adhesive tapes are placed outside the vacuum bag. When a first part of the article has been moulded, the mould is turned around the center 28 in such way that the vacuum bag 15 can be sealed to the cured article 30 already moulded, as shown in Figure 4b. A second new part of the article may be moulded as an extension to the first part 30 to manufacture a body of revolution type of article. In Figure 4b three parts are required to form the complete revolution of a cylindrical object. The mould may be moved along the axis of the cylinder, sealed to the already moulded and cured parts 30, 31, and the described steps may be repeated to form an extension to the cylinder, as shown in Figure 4c. The anchoring means 29 attached to the turning center 28 enable maintaining the same distance to the center 28 throughout the moulding of the whole object. In the example of Figure 4c adhesive tape 16 has been used for sealing and attaching the vacuum bag to the mould. In this example the sealing means 18 for sealing the junction between the mould walls is made of different material than the adhesive tape 16.
Figure 5 shows an example of a mould for moulding a spherical article. Figure 5a shows a cross-section of the mould wherein the mould walls 50-57 are anchored in a central anchoring means 28 and extend as lamels or as foliate sheets to define a spherical space and surface. The vacuum bag 15 defining the vacuum space 17 is placed outside the mould. Therefore the sealing means 18 are attached on the junctions 58 of the mould walls 50, 51 inside the mould. For clarity only one sealing means 18 is illustrated in Figure 5a. The anchoring central point is attached to a pole which supports the whole structure.
Figure 5b shows a view outside the mould when the vacuum bag 15 has been placed on the mould. Figure 5c shows the foldable mould when it is not extended for moulding. In the folded state the mould walls 50-57 are turned into a bundle so that the construction may be removed from the moulded spherical article through the opening.

## Claims

1. A geometrically transformable vacuum assisted infusion casting mould for producing an infusion-moulded reinforced composite article, the mould comprising
- at least two movable mould walls (10, 11, 12, 26, 27, 50-57) defining a mould space (14), a mould surface and an opening to the mould space, the mould walls being positionable to provide a desired shape for the object to be moulded, wherein the contour formed by the mould walls define at least a partial outer surface or inner surface of the composite structure to be moulded, two mould walls being connected to each other by a junction,
- a vacuum bag (15) sealable to the mould and forming a vacuum space (17) with the mould when sealed,
- means (20) for introducing vacuum into the vacuum space (17), and
- sealing means (18) located at each junction of the two mould walls (10, 11, 12, 26, 27, 50-57), such as butt junction, the material of the sealing means being flexible and the sealing means being arranged to seal the junction when vacuum is applied into the vacuum space, wherein the sealing means are elongated substantially flat pieces comprising elastic material, such as elastomeric or plastomeric material, wherein the sealing means are located on the other side of the mould than the vacuum space (17) and the flexible material of the sealing means is arranged to be pressed by the suction of the inside vacuum to the junction of the two mould walls to air-tightly seal the junction.

2. The mould of claim 1, **characterized in that** the elastic material comprises butyl rubber or silicone.

3. The mould of any of the preceding claims, **characterized in that** the sealing means are strip-like sealing means, for example having a thickness in the range of 1-10 mm, 1-5 mm, or 1-4 mm, and a width in the range of 1-10 cm, 1-5 cm, or 1-3 cm.

4. The mould of any of the preceding claims, **characterized in that** the sealing means contain no adhesive in the junction area.

5. The mould of any of the preceding claims, **characterized in that** it comprises
- at least two movable mould walls (10, 11, 12) defining a mould space (14) and an opening to the mould space,
- a vacuum bag (15) sealable to the mould and forming a vacuum space (17) inside the mould when sealed,
- means (20) for introducing vacuum into the vacuum space (17), and
- sealing means (18) located at each junction of two mould walls (10, 11, 12) outside the walls, the sealing means being arranged to seal the junction when vacuum is applied into the vacuum space.

6. The mould of any of the claims 1-4, **characterized in that** it comprises
- at least two movable mould walls (26, 27, 50-57) defining a mould space and an opening to the mould space,
- a vacuum bag (15) sealable to the mould and forming a vacuum space (17) outside the mould when sealed,
- means for introducing vacuum into the vacuum space, and
- sealing means (18) located at each junction of two mould walls (26, 27, 50-57) inside the mould, the sealing means being arranged to seal the junction when vacuum is applied into the vacuum space.

7. The mould of any of the preceding claims, **characterized in that** it further comprising means for introducing liquid matrix material into the vacuum space (17), such as one or more channels (19) arranged inside the vacuum space (17) or one or more channels integrated to the vacuum bag (15).

8. The mould of any of the preceding claims, **characterized in that** the vacuum bag (15) comprises flexible plastic, or elastomeric or plastomeric material, or medium hard plastic.

9. The mould of any of the claims 1-5 or 7-8, **characterized in that** the mould space defines an elongated casting space having a length at least two times of the width of said space, or at least three, four, five or more times, such as ten or more times of the width of said space.

10. The mould of any of the claims 1-4, 6-8, **characterized in that** the mould space defines a substantially spherical casting space.

11. A method for vacuum assisted resin infusion moulding of a reinforced composite article, wherein the method comprises
- providing the geometrically transformable vacuum assisted resin infusion casting mould of any of the preceding claims; and
- positioning the movable mould walls (10, 11, 12, 26, 27, 50-57) to provide a desired shape for the article to be moulded,
- introducing reinforcement material onto the mould surface,
- sealing the mould with said vacuum bag (15) to form a vacuum space (17),
- introducing vacuum into the vacuum space,
- introducing matrix material, preferably resin, such as polyester resin, vinyl ester resin, epoxy resin or shape memory polymer resin, into the vacuum space to mould the reinforced composite article.

12. The method of claim 11, **characterized in that** it comprises introducing the reinforcement material onto the mould surface through the opening to the mould space.

13. The method of claim 11, **characterized in that** it comprises introducing the reinforcement material into the vacuum space in admixture with the matrix material.

14. The method of any of the claims 11-13, **characterized in that** it comprises introducing the matrix material into the vacuum space in liquid form.

15. The method of any of the claims 11-13, **characterized in that** it comprises introducing the matrix material onto the mould surface in solid form, such as in the form of sheets or films.

16. The method of any of the claims 12-15, **characterized in that** it comprises, after the moulded article has been cured, moving the mould to other position of the moulded article and positioning and sealing the mould to the moulded article,
- introducing reinforcement material onto the mould surface,
- sealing the mould with said vacuum bag,
- introducing vacuum into the vacuum space, and
- introducing matrix material into the vacuum space to mould an extension to the previously moulded composite article.

## Patentansprüche

1. Geometrisch umwandelbare vakuumunterstützte Infusionsgießform zur Herstellung eines durch Infusion geformten verstärkten Verbundgegenstands, wobei die Form Folgendes umfasst
- mindestens zwei bewegliche Formwände (10, 11, 12, 26, 27, 50-57), die einen Formraum (14), eine Formoberfläche und eine Öffnung zum Formraum definieren, wobei die Formwände positionierbar sind, um eine gewünschte Form für das zu formende Objekt bereitzustellen, wobei die durch die Formwände gebildete Kontur zumindest teilweise eine Außenfläche oder Innenfläche der zu formenden Verbundstruktur definiert, wobei die zwei Formwände durch eine Verbindung miteinander verbunden sind,
- ein Vakuumbeutel (15), der mit der Form versiegelbar ist und mit der Form einen Vakuumraum (17) bildet, wenn er versiegelt ist,
- Mittel (20) zum Einführen von Vakuum in den Vakuumraum (17), und
- Dichtungsmittel (18), die sich an jeder Verbindung der beiden Formwände (10, 11, 12, 26, 27, 50-57) befinden, wie beispielsweise Stoßverbindungen, wobei das Material des Dichtungsmittels flexibel ist und das Dichtungsmittel so angeordnet ist, dass es die Verbindung abdichtet, wenn Vakuum in den Vakuumraum angelegt wird, wobei die Dichtungsmittel längliche, im Wesentlichen flache Stücke sind, die elastisches Material umfassen, wie z.B. elastomeres oder plastomeres Material, wobei die Dichtungsmittel auf der anderen Seite der Form als der Vakuumraum (17) angeordnet sind und das flexible Material der Dichtungsmittel so angeordnet ist, dass es durch die Saugwirkung des Innenvakuums an die Verbindung der beiden Formwände gedrückt wird, um die Verbindung luftdicht zu verschließen.

2. Form nach Anspruch 1, **dadurch gekennzeichnet, dass** das elastische Material Butylkautschuk oder Silikon umfasst.

3. Form nach einem der vorhergehenden Ansprüche, **dadurch gekennzeichnet, dass** die Dichtungsmittel streifenförmige Dichtungsmittel sind, beispielsweise mit einer Dicke im Bereich von 1 bis 10 mm, 1 bis 5 mm oder 1 bis 4 mm, und eine Breite im Bereich von 1 bis 10 cm, 1 bis 5 cm oder 1 bis 3 cm.

4. Form nach einem der vorhergehenden Ansprüche, **dadurch gekennzeichnet, dass** die Dichtungsmittel im Verbindungsbereich keinen Klebstoff enthalten.

5. Form nach einem der vorhergehenden Ansprüche, **dadurch gekennzeichnet, dass** sie Folgendes umfasst
- wenigstens zwei bewegliche Formwände (10, 11, 12), die einen Formraum (14) und eine Öffnung zum Formraum begrenzen,
- ein Vakuumbeutel (15), der mit der Form versiegelbar ist und einen Vakuumraum (17) innerhalb der Form bildet, wenn er versiegelt ist,
- Mittel (20) zum Einführen von Vakuum in den Vakuumraum (17), und
- Dichtungsmittel (18), die sich an jeder Verbindung von zwei Formwänden (10, 11, 12) außerhalb der Wände befinden, wobei die Dichtungsmittel so angeordnet sind, dass sie die Verbindung abdichten, wenn Vakuum in den Vakuumraum angelegt wird.

6. Form nach einem der Ansprüche 1 bis 4, **dadurch gekennzeichnet, dass** sie Folgendes umfasst
- wenigstens zwei bewegliche Formwände (26, 27, 50-57), die einen Formraum und eine Öffnung zum Formraum definieren,
- ein Vakuumbeutel (15), der an der Form versiegelbar ist und einen Vakuumraum (17) außerhalb der Form bildet, wenn er versiegelt ist,
- Mittel zum Einführen von Vakuum in den Vakuumraum, und
- Dichtungsmittel (18), die an jeder Verbindung von zwei Formwänden (26, 27, 50-57) innerhalb der Form angeordnet sind, wobei die Dichtungsmittel angeordnet sind, um die Verbindung abzudichten, wenn Vakuum in den Vakuumraum angelegt wird.

7. Form nach einem der vorhergehenden Ansprüche, **dadurch gekennzeichnet, dass** sie ferner Mittel zum Einführen von flüssigem Matrixmaterial in den Vakuumraum (17) umfasst, wie etwa einen oder mehrere Kanäle (19), die innerhalb des Vakuumraums (17) angeordnet sind, oder einen oder weitere Kanäle im Vakuumbeutel (15) integriert.

8. Form nach einem der vorhergehenden Ansprüche, **dadurch gekennzeichnet, dass** der Vakuumbeutel (15) flexiblen Kunststoff oder elastomeres oder plastomeres Material oder mittelharten Kunststoff umfasst.

9. Form nach einem der Ansprüche 1 bis 5 oder 7 bis 8, **dadurch gekennzeichnet, dass** der Formraum einen länglichen Gießraum mit einer Länge definiert, die mindestens zweimal so groß wie die Breite des Raums oder mindestens das Drei-, Vier-, Fünf- oder Mehrfache, wie etwa das Zehn- oder Mehrfache der Breite des Zwischenraums ist.

10. Form nach einem der Ansprüche 1 bis 4, 6 bis 8, **dadurch gekennzeichnet, dass** der Formraum einen im Wesentlichen kugelförmigen Gießraum definiert.

11. Verfahren zum vakuumunterstützten Harzinfusionsformen eines verstärkten Verbundgegenstands, wobei das Verfahren Folgendes umfasst
- Bereitstellen der geometrisch umwandelbaren vakuumunterstützten Harzinfusions-Gießform nach einem der vorangehenden Ansprüche; und
- Positionieren der beweglichen Formwände (10, 11, 12, 26, 27, 50-57), um eine gewünschte Form für den zu formenden Artikel bereitzustellen,
- Einführen von Verstärkungsmaterial auf die Formoberfläche,
- Abdichten der Form mit dem Vakuumbeutel (15), um einen Vakuumraum (17) zu bilden,
- Einführen von Vakuum in den Vakuumraum,
- Einführen von Matrixmaterial, vorzugsweise Harz, wie etwa Polyesterharz, Vinylesterharz, Epoxidharz oder Polymerharz mit Formgedächtnis, in den Vakuumraum, um den verstärkten Verbundgegenstand zu formen.

12. Verfahren nach Anspruch 11, **dadurch gekennzeichnet, dass** es das Einführen des Verstärkungsmaterials auf die Formoberfläche durch die Öffnung zum Formraum umfasst.

13. Verfahren nach Anspruch 11, **dadurch gekennzeichnet, dass** es das Einführen des Verstärkungsmaterials in den Vakuumraum im Gemisch mit dem Matrixmaterial umfasst.

14. Verfahren nach einem der Ansprüche 11 bis 13, **dadurch gekennzeichnet, dass** es das Einführen des Matrixmaterials in den Vakuumraum in flüssiger Form umfasst.

15. Verfahren nach einem der Ansprüche 11 bis 13, **dadurch gekennzeichnet, dass** es das Einführen des Matrixmaterials auf die Formoberfläche in fester Form, wie beispielsweise in Form von Platten oder Filmen, umfasst.

16. Verfahren nach einem der Ansprüche 12 bis 15, **dadurch gekennzeichnet, dass** es Folgendes umfasst: nachdem der Formgegenstand ausgehärtet wurde, Bewegen der Form zu einer anderen Position des Formgegenstands und das Positionieren und Abdichten der Form an dem Formgegenstand,
- Einführen von Verstärkungsmaterial auf die Formoberfläche,
- Versiegeln der Form mit dem Vakuumbeutel,
- Einführen von Vakuum in den Vakuumraum, und
- Einführen von Matrixmaterial in den Vakuumraum, um eine Verlängerung an dem zuvor geformten Verbundgegenstand zu formen.

## Revendications

1. Moule de coulée par infusion de résine assistée par vide à géométrie transformable pour la production d'un article composite renforcé moulé par infusion, le moule comprenant
- au moins deux parois de moule mobiles (10, 11, 12, 26, 27, 50 à 57) définissant un espace de moule (14), une surface de moule et une ouverture vers l'espace de moule, les parois de moule pouvant être positionnées de manière à donner une forme souhaitée à l'objet à mouler, dans lequel le contour formé par les parois du moule définit au moins une surface extérieure partielle ou une surface intérieure de la structure composite à mouler, deux parois de moule étant reliées l'une à l'autre par une jonction,
- un sac à vide (15) apte à être scellé sur le moule et formant un espace sous vide (17) avec le moule lorsqu'il est scellé,
- un moyen (20) pour introduire du vide dans l'espace sous vide (17), et
- des moyens d'étanchéité (18) situés au niveau de chaque jonction des deux parois de moule (10, 11, 12, 26, 27, 50 à 57), telle qu'une jonction bout à bout, le matériau des moyens d'étanchéité étant souple et les moyens d'étanchéité étant agencés de manière à étanchéifier la jonction lorsqu'un vide est appliqué dans l'espace sous vide, dans lequel les moyens d'étanchéité sont des pièces allongées sensiblement plates comprenant un matériau élastique, tel qu'un matériau élastomère ou plastomère, dans lequel les moyens d'étanchéité sont situés de l'autre côté du moule par rapport à l'espace sous vide (17) et le matériau souple des moyens d'étanchéité est agencé de manière à être pressé par l'aspiration du vide intérieur contre la jonction des deux parois de moule pour sceller la jonction de manière étanche à l'air.

2. Moule selon la revendication 1, **caractérisé en ce que** le matériau élastique comprend du caoutchouc butyle ou du silicone.

3. Moule selon l'une quelconque des revendications précédentes, **caractérisé en ce que** les moyens d'étanchéité sont des moyens d'étanchéité en forme de bande, par exemple ayant une épaisseur dans la plage de 1 à 10 mm, 1 à 5 mm ou 1 à 4 mm, et une largeur dans la plage de 1 à 10 cm, 1 à 5 cm ou 1 à 3 cm.

4. Moule selon l'une quelconque des revendications précédentes, **caractérisé en ce que** les moyens d'étanchéité ne contiennent pas d'adhésif dans la zone de jonction.

5. Moule selon l'une quelconque des revendications précédentes, **caractérisé en ce qu'**il comprend
- au moins deux parois de moule mobiles (10, 11, 12) définissant un espace de moule (14) et une ouverture vers l'espace de moule,
- un sac à vide (15) apte à être scellé sur le moule et formant un espace sous vide (17) à l'intérieur du moule lorsqu'il est scellé,
- un moyen (20) pour introduire du vide dans l'espace sous vide (17), et
- des moyens d'étanchéité (18) situés à chaque jonction de deux parois de moule (10, 11, 12) à l'extérieur des parois, les moyens d'étanchéité étant agencés de manière à étanchéifier la jonction lorsqu'un vide est appliqué dans l'espace sous vide.

6. Moule selon l'une quelconque des revendications 1 à 4, **caractérisé en ce qu'** il comprend
- au moins deux parois de moule mobiles (26, 27, 50 à 57) définissant un espace de moule et une ouverture vers l'espace de moule,
- un sac à vide (15) apte à être scellé sur le moule et formant un espace sous vide (17) à l'extérieur du moule lorsqu'il est scellé,
- un moyen pour introduire du vide dans l'espace sous vide, et
- des moyens d'étanchéité (18) situés à chaque jonction de deux parois de moule (26, 27, 50 à 57) à l'intérieur du moule, les moyens d'étanchéité étant agencés de manière à étanchéifier la jonction lorsqu'un vide est appliqué dans l'espace sous vide.

7. Moule selon l'une quelconque des revendications précédentes, **caractérisé en ce qu'**il comprend en outre un moyen pour introduire un matériau de matrice liquide dans l'espace sous vide (17), tel qu'un ou plusieurs canaux (19) agencés à l'intérieur de l'espace sous vide (17) ou un ou plusieurs canaux intégrés au sac à vide (15) .

8. Moule selon l'une quelconque des revendications précédentes, **caractérisé en ce que** le sac à vide (15) comprend du plastique souple, ou un matériau élastomère ou plastomère ou du plastique moyennement dur.

9. Moule selon l'une quelconque des revendications 1 à 5 ou 7 à 8, **caractérisé en ce que** l'espace de moule définit un espace de coulée allongé ayant une longueur d'au moins deux fois la largeur dudit espace, ou au moins trois, quatre, cinq fois ou plus, par exemple dix fois ou plus la largeur dudit espace.

10. Moule selon l'une quelconque des revendications 1 à 4 ou 6 à 8, **caractérisé en ce que** l'espace de moule définit un espace de coulée sensiblement sphérique.

11. Procédé de moulage par infusion de résine assistée par vide d'un article composite renforcé, dans lequel le procédé comprend
- la fourniture du moule de coulée par infusion de résine assistée par vide à géométrie transformable selon l'une quelconque des revendications précédente ; et
- le positionnement des parois de moule mobiles (10, 11, 12, 26, 27, 50 à 57) pour obtenir une forme souhaitée de l'article à mouler,
- l'introduction d'un matériau de renfort sur la surface du moule,
- le scellage du moule avec ledit sac à vide (15) pour former un espace sous vide (17),
- l'introduction de vide dans l'espace sous vide,
- l'introduction du matériau de matrice, de préférence de la résine, telle qu'une résine polyester, une résine d'ester vinylique, une résine époxy ou une résine polymère à mémoire de forme, dans l'espace sous vide pour mouler l'article composite renforcé.

12. Procédé selon la revendication 11, **caractérisé en ce qu'**il comprend l'introduction du matériau de renfort sur la surface du moule à travers l'ouverture vers l'espace de moule.

13. Procédé selon la revendication 11, **caractérisé en ce qu'**il comprend l'introduction du matériau de renfort dans l'espace sous vide en mélange avec le matériau de matrice.

14. Procédé selon l'une quelconque des revendications 11 à 13, **caractérisé en ce qu'**il comprend l'introduction du matériau de matrice dans l'espace sous vide sous forme liquide.

15. Procédé selon l'une quelconque des revendications 11 à 13, **caractérisé en ce qu'**il comprend l'introduction du matériau de matrice sur la surface de moule sous forme solide, telle que sous forme de feuilles ou de films.

16. Procédé selon l'une quelconque des revendications 12 à 15, **caractérisé en ce qu'** il comprend, après que l'article moulé a été durci, le déplacement du moule vers une autre position de l'article moulé et le positionnement et le scellage du moule sur l'article moulé,
- l'introduction d'un matériau de renfort sur la surface du moule,
- le scellage du moule avec ledit sac à vide,
- l'introduction de vide dans l'espace sous vide, et
- l'introduction du matériau de matrice dans l'espace sous vide pour mouler une extension de l'article composite préalablement moulé.
